# EUROPÄISCHE PATENTANMELDUNG

(11) **EP 1 253 791 A1**
(43) Veröffentlichungstag der Anmeldung: **30.10.2002**
(21) Anmeldenummer: 02360104.0
(22) Anmeldetag: 26.03.2002
(51) Int. Cl.: H04Q 7/22

(54) **Dienst-Server**

(30) Priorität: 21.04.2001 DE 10119551
(71) Anmelder: ALCATEL, 75008 Paris (FR)
(72) Erfinder: Lautenschlager, Wolfgang, 71287 Weissach-Flacht (DE)
(74) Vertreter: Rausch, Gabriele, Dr.

(57) **Zusammenfassung**

Die Erfindung betrifft ein Verfahren zum Bereitstellen eines Dienstes über ein Kommunikationsnetz (KN), wobei bei dem Verfahren über das Kommunikationsnetz (KN) auf einen Dienst-Server (SERV) zugegriffen wird, der den Dienst für Dienst-Nutzer (A,B) erbringt. Weiter betrifft die Erfindung einen Dienst-Server (SERV) zur Durchführung des Verfahrens. Durch Interaktion (TS) zwischen einem Endgerät (TE1) des Dienstnutzers (A) und dem Dienst-Server (SERV) über das Kommunikationsnetz (KN) werden Daten über eine nutzerspezifische Tour des Dienstnutzers (A) spezifiziert und in einem nutzerspezifischen Datensatz des Dienstnutzers (A) abgespeichert. Lokalisierungsdaten (LI), die den Aufenthaltsort eines mobilen Endgerätes (TE2) des Dienstnutzers beschreiben, werden über das Kommunikationsnetz (KN) zu dem Dienst-Server (SERV) übermittelt. Der Dienst-Server (SERV) korreliert mittels der empfangenen Lokalisierungsdaten (LI) und mittels der in dem nutzerspezifischen Datensatz abgelegten Daten über eine nutzerspezifische Tour des Dienstnutzers (A) den Aufenthaltsort des mobilen Endgerätes (TE2) mit der nutzerspezifischen Tour und berechnet hieraus ein Korrelationsergebnis.

## Beschreibung

Die Erfindung betrifft ein Verfahren zum Bereitstellen eines Dienstes über ein Kommunikationsnetz, wobei bei dem Verfahren über das Kommunikationsnetz auf einen Dienst-Server zugegriffen wird, der den Dienst für Dienst-Nutzer erbringt. Weiter betrifft die Erfindung einen Dienst-Server zur Durchführung des Verfahrens.

Die Erfindung geht von einem System aus, wie es beispielsweise in DE 19626114 beschrieben ist.

Dieses System stellt Teilnehmern mit speziell ausgestalteten Mobilfunkendgeräten einen Dienst bereit, mittels dem sie individuell vor Verkehrsstörungen gewarnt werden. Bei den speziell ausgestalteten Mobilfunkendgeräte handelt es sich um Navigationssysteme für Fahrzeuge, die mit einer Mobilfunk-Empfangseinrichtung versehen sind. Empfängt eine Mobilfunkfeststation eine Störungsmeldung, die den Ort einer Verkehrsstörung beschreibt, so sendet sie rundfunkartig Störungsmeldungen an alle in der Nähe befindlichen Mobilfunkendgeräte.

Die speziell ausgestalteten Endgeräte verfügen über eine GPS Lokalisierungseinrichtung (GPS = Global Positioning System). Mittels dieser Einrichtung bestimmen die Endgeräte, ob die von einer Störungsmeldung beschriebene Verkehrsstörung sich in der Nähe des Endgerätes befindet. Ist dies der Fall, so wird an den Fahrzeugnutzer eine spezielle Meldung ausgegeben.

Der Erfindung liegt nun die Aufgabe zugrunde, die technische Leistungsfähigkeit solcher Systeme zu verbessern.

Diese Aufgabe wird gelöst durch ein Verfahren nach der Lehre von Anspruch 1 sowie durch einen Dienst-Server nach der Lehre von Anspruch 8.

Der Erfindung liegt hierbei der Gedanke zugrunde Dienstnutzern einen Netzwerkdienst zur Verfügung zu stellen, der es den Dienstnutzern in einer Vorbereitungsphase erlaubt, nutzerspezifische Touren gegenüber dem Dienst zu spezifizieren. Mittels empfangenen Lokalisierungsdaten wird von dem Netzwerkdienst der Aufenthaltsort eines mobilen Endgerätes des Teilnehmers mit der spezifizierten nutzerspezifischen Tour korreliert und hieraus ein Korrelationsergebnis berechnet. Dieses Korrelationsergebnis bildet sodann die Basis für ein oder mehrere weitere Netz-Dienste.

Vorteilhafte Ausgestaltungen der Erfindung sind den Unteransprüchen zu entnehmen.

Im folgenden wir die Erfindung anhand mehrerer Ausführungsbeispielen unter Zuhilfenahme beiliegender Zeichnungen beispielhaft erläutert.
- Fig. 1: zeigt ein Kommunikationssystem mit einem erfindungsgemäßen Dienst-Server.
- Fig. 2: zeigt ein eine funktionelle Darstellung des Dienst-Servers nach Fig. 1.

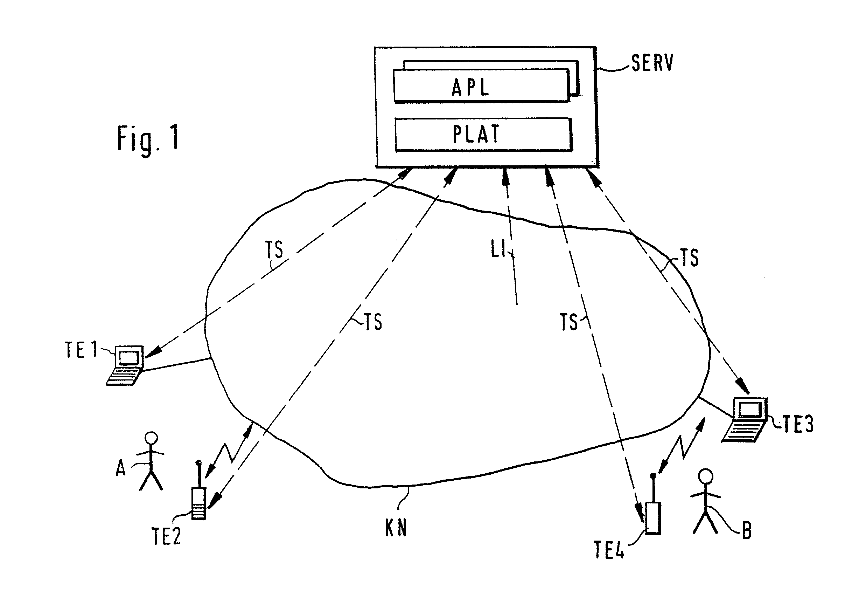

Fig. 1 zeigt ein Kommunikationsnetz KN, vier Endgeräte TE1 bis TE4 und einen Dienst-Server SERV.

Das Kommunikationsnetz KN ist so ausgestaltet, daß es die Kommunikation zwischen den Endgeräten TE1 bis TE4 einerseits und dem Dienst-Server SERV andererseits ermöglicht. Im einfachsten Fall handelt es sich bei dem Kommunikationsnetz KN um ein übliches Fernsprechnetz, das mehrere miteinander verbunden Teilnetze umfaßt, die unterschiedlichen Netzebenen zuordnet sein können. Es ist vorteilhaft, daß das Kommunikationsnetz KN weiter auch die Funktion eines Datennetzes mitumfaßt. Das Kommunikationsnetz KN kann beispielsweise aus ein oder mehreren optischen Backbone-Netzen, aus ein oder mehr Zugangsnetzen (beispielsweise Kabel-Netzen, Mobilfunknetze), aus ein oder mehreren darauf aufsetzenden IP-Netzen (IP = Internet-Protokoll) oder PSTN-Netzen (PSTN = Public Switched Telephone Network) bestehen. Der genaue Aufbau der Kommunikationsnetze KN1 bis KN3 ist vorteilhafterweise an die von den Endgeräten TE1 bis TE4 benötigten Kommunikationsdienste anzupassen.

Von den Endgeräten, die mit dem Kommunikationsnetz KN kommunizieren, sind in Fig. 1 beispielhaft nur die Endgeräte TE1 bis TE4 gezeigt.

Bei den Endgeräten TE1 und TE3 handelt es sich jeweils um einen Computer mit einer Schnittstellenkarte zur Datenkommunikation oder zur mobilen Datenkommunikation. Es ist jedoch auch möglich, daß es sich bei diesen Endgeräten um Fernsprechendgeräte, beispielsweise um Telephone oder Mobilfunk-Telephone, oder um beliebige andersartige Kommunikations-Endgeräte handeln, beispielsweise um Multimedia-Terminals zur Sprach- Daten- und/oder Video-Kommunikation.

Bei den Endgeräten TE2 und TE4 handelt es sich jeweils um ein mobiles Endgerät, das über eine Funkschnittstelle mit dem Kommunikationsnetz KN kommuniziert. Diese Endgerät kommunizieren vorzugsweise über ein zellulares Funknetz, beispielsweise nach dem GSM Standard (Global System for Mobile Communication) oder UMTS Standard (Universal Mobile Telecommunications System), das insofern Teil des Kommunikationsnetzes KN ist. Bei diesen Endgeräten kann es sich um Endgeräte handeln, die allein der Sprachkommunikation dienen. Es kann sich bei diesen Endgeräten aber auch um Endgeräte handeln, das zusätzlich auch der Bildund/oder Datenkommunikation dienen und mit entsprechenden zusätzlichen Komponenten wie Bildwandler- und Bildwiedergabeeinrichtung ausgestattet ist.

Der Server SERV stellt Dienstnutzern ein oder mehrere Dienste über das Kommunikationsnetz KN bereit. Der Server SERV ist hierbei vorzugsweise einem von den Netzbetreibern des Kommunikationsnetzes KN unabhängigen Dienstbetreiber zugeordnet. Es ist jedoch auch möglich, daß der Server SERV einem Netzbetreiber zugeordnet ist und von diesem Betrieben wird.

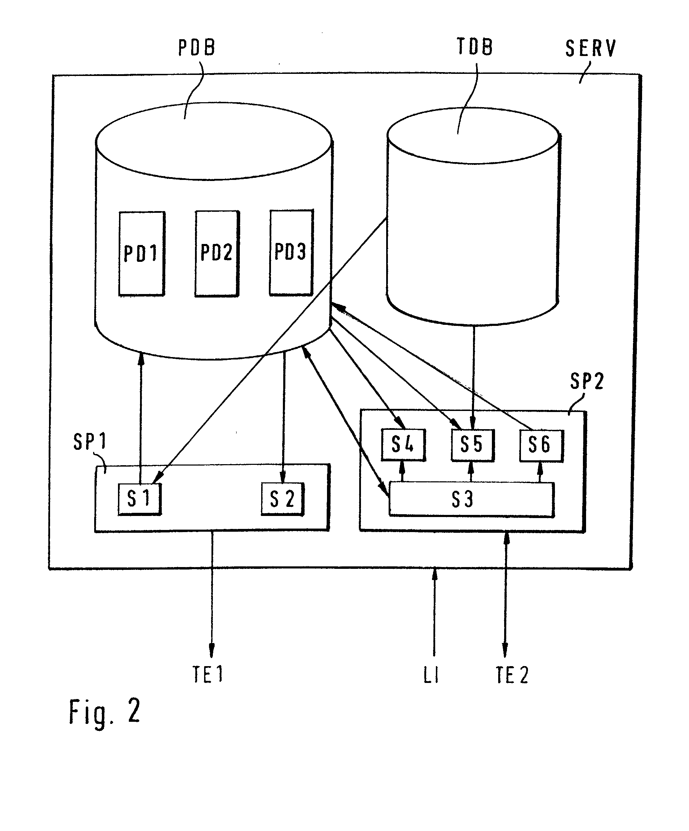

Der Dienst-Server SERV besteht aus einem oder mehreren über ein Kommunikationsnetz verbundenen Rechnern (Hardware-Plattform), aus einer auf dieser Hardware-Plattform aufsetzenden Software-Plattform, beispielsweise bestehend aus Betriebssystem, Datenbanksystem, Middelware Komponenten und einer ORB Plattform (ORB = Objekt Request Broker), beispielsweise einer CORBA Plattform (CORBA = Common Objekt Request Broker Architektur), und aus mehreren auf dieser Software-Plattform aufsetzenden Applikationsprogrammen. Durch den Ablauf von Applikationsprogrammen APL auf der Software- und Hardware-Plattform PLAT des Dienst-Servers SERV implementiert der Dienst-Server SERV insbesonders die im Folgenden anhand von Fig. 2 beschriebenen Funktionen, die damit durch das Zusammenwirken der Steuermittel des Servers SERV, also Hardwareplattform, Softwareplattform und Applikationsprogramme erbracht werden.

Die Endgeräte TE1 und TE2 sind dem Dienstnutzer A, die Endgeräte TE3 und TE4 dem Dienstnutzer B zugeordnet. Mittels der Endgerät TE1 und TE2 greift der Dienst-Nutzer A über das Kommunikationsnetz KN auf den Dienst-Server SERV zu, der sodann den im Folgenden beschriebenen Dienst für den Dienst-Nutzer (A) erbringt:

In einer Vorbereitungsphase werden durch Interaktion TS zwischen dem Endgerät TE1 des Dienstnutzers A und dem Dienst-Server SERV über das Kommunikationsnetz KN Daten über eine nutzerspezifische Tour des Dienstnutzers A spezifiziert. Diese Daten werden von dem Dienst-Server SERV sodann in einem nutzerspezifischen Datensatz des Dienstnutzers A abgespeichert.

In einer zweiten Phase, einer Betriebsphase, werden laufend Lokalisierungsdaten LI, die den Aufenthaltsort des mobilen Endgerätes TE2 beschreiben, über das Kommunikationsnetz KN zu dem Dienst-Server SERV übermittelt. Mittels der empfangenen Lokalisierungsdaten LI und mittels der in dem nutzerspezifischen Datensatz abgelegten Daten über eine nutzerspezifische Tour des Dienstnutzers korreliert der Dienst-Server SERV sodann den Aufenthaltsort des mobilen Endgerätes TE2 mit der in dem nutzerspezifischen Datensatz des Dienstnutzers A abgespeicherten nutzerspezifischen Tour und berechnet hieraus ein Korrelationsergebnis.

Aus dem Korrelationsergebnis berechnet der Dienst-Server SERV beispielsweise Wegeleitinformationen. Die berechneten Wegeleitinformationen, werden von dem Dienst-Server SERV im Rahmen einer Interaktion TS über das Kommunikationsnetz KN an das mobile Endgerät TE2 übermittelt.

Im folgenden wird die detaillierte Funktionsweise des Dienst-Servers SERV anhand von Fig. 2 erläutert.

Fig. 2 zeigt eine funktionelle Darstellung des Dienst-Servers SERV. Der Dienst-Server SERV weist aus funktioneller Sicht zwei Datenbanken PDB und TDB und zwei Dienststeuereinheiten SP1 und SP2 mit Dienststeuerfunktionen S1 und S2 bzw. S3, S4, S5 und S6 auf.

In der Datenbanken PDB werden mehrere nutzerspezifische Datensätze verwaltet, von denen in Fig. 2 beispielhaft drei Datensätze PD1 bis PD3 gezeigt sind. Es ist natürlich auch möglich, daß in der Datenbank PDB nur ein nutzerspezifischer Datensatz verwaltet wird. Nutzerspezifisch bedeutet in diesem Zusammenhang, daß die Daten des jeweiligen Datensatzes zumindest zum Teil von dem zugeordneten Dienstnutzer spezifiziert werden können.

Jeder der Datensätze PD1 bis PD3 ist einem anderen Dienstnutzer zugeordnet. Der Datensatz PD1 ist so beispielsweise dem Dienstnutzer A und der Datensatz PD2 dem Dienstnutzer B zugeordnet. Jeder der Datensätze PD1 bis PD3 enthält vorzugsweise Daten über eine einzige nutzerspezifische Tour des zugeordneten Dienstnutzers, kann aber auch Daten über mehrere nutzerspezifische Touren des zugeordneten Dienstnutzers enthalten.

Weiter ist es auch möglich, daß in der Datenbank PDB zwei oder mehr nutzerspezifische Datensätze eines Dienstnutzer verwaltet werden, wobei in den zwei oder mehr nutzerspezifische Datensätze verschiedenen nutzerspezifische Touren desselben Dienstnutzers spezifiziert sind.

In jedem der nutzerspezifischen Datensätze PD1 bis PD3 sind Daten abgespeichert, die eine jeweilige nutzerspezifische Tour des zugeordneten Dienstnutzers beschreiben. Diese Daten fixieren somit zum einen den geographischen Ablauf der Tour, in dem sie beispielsweise die geographische Position mehrere oder einer Vielzahl von Wegepunkten der nutzerspezifischen Tour beinhalten. Weiter ist es auch möglich, daß zu jedem der Wegepunkte noch ein Satz von Parametern und/ oder zugeordneten Informationen in dem jeweiligen Datensatz abgespeichert ist. Neben solchen Daten, die eine nutzerspezifische Tour eines Dienstnutzers beschreiben, sind in dem jeweiligen Datensatz Vorteilhafterweise noch ein tourspezifischer Parametersatz sowie Informationen darüber abgespeichert, welchem Dienstnutzer der Datensatz zugeordnete ist.

Weiter ist es vorteilhaft, daß die Datenbank PDB neben derartigen nutzerspezifischen Datensätzen auch noch einen weiteren Datensatz pro registrierten Dienstnutzer beinhaltet, in dem dienstnutzerspezifische Daten, beispielsweise ein Nutzerprofil, abgespeichert sind.

Die Datenbanken TDB enthält Daten über eine Vielzahl vorgefertigter Touren, Informationen zu diesen Touren, sowie ortsabhängige Informationen, die beispielsweise geographischen, geschichtlichen oder wirtschaftlichen Inhalt haben und sich in irgend einer Weise auf bestimmte Ort oder Regionen beziehen. Solche Informationen können neben Text auch Audio- und Videoinformationen beinhalten.

Es ist auch möglich, daß die Datenbank TDB nicht Teil des Dienst-Servers SERV ist und auf einem oder mehreren anderen Rechnern installiert ist, die über ein Kommunikationsnetz mit dem Dienst-Server SERV verbunden sind. Die Datenbank TDB kann auch von einer Vielzahl von Datenbanken gebildet werden, die jeweils einen Teil des Inhalts der Datenbank TDB beinhalten.

Die Dienststeuereinheit SP1 erbringt im Wesentlichen Funktionen zum Vorbereiten und Nachbereiten einer nutzerspezifischen Tour, wohingegen die Dienststeuereinheit SP2 Funktionen zur Unterstützung eines Dienstnutzers während des Durchführens einer nutzerspezifischen Tour erbringt. Daneben greifen auf die Dienststeuereinheiten SP1 und SP2 Vorteilhafterweise unterschiedliche Endgeräte zu, beispielsweise auf die Dienststeuereinheit SP1 ein PC mit WEB Browser und großem Bildschirm und auf die Dienststeuereinheit SP2 ein GSM-Mobilfunktelephon. Die Benutzerschnittstellen der Dienststeuereinheiten SP1 und SP2 sind somit in der Regel vollkommen unterschiedlich.
Sollte hier nicht auch insbesondere UMTS Mobilfunktelephone erwähnt werden?

Im Folgenden wird die detaillierte Funktionsweise der Dienststeuereinheiten SP1 und SP2 und der Dienststeuerfunktionen S1 bis S6 beschrieben.

Die Dienststeuereinheit SP1 erbringt die Dienststeuerfunktionen S1 und S2 und stellt eine Benutzerschnittstelle zu diesen Dienststeuerfunktionen bereit. Vorzugsweise kommunizieren die Dienstnutzer mit der Dienststeuereinheit SP mittels des IP Protokolls (IP = Internet Protokoll) und darauf aufsetzenden Applikations-Protokollen, so daß es einem Dienstnutzer beispielsweise möglich ist, über eine übliche Internet Benutzerschnittstelle mittels eines üblichen WEB Browsers auf die Dienststeuereinheit SP1 zuzugreifen, der insofern eine spezielle IP Adresse zugeordnet ist.

Ein Dienstnutzer greift mittels eines Endgerätes, beispielsweise mittels des Endgerätes TE1, auf die Dienststeuereinheit SP1 zu.

Die Dienststeuereinheit SP1 überprüft mittels Zugriff auf die Datenbank PDB, ob der Dienstnutzer für den von dem Dienst-Server SERV bereitgestellten Dienst registriert ist und ermittelt die Identität des Dienstnutzer. Hierzu führt sie Vorteilhafterweise eine Authentisierungsprozedur durch. Auf die Überprüfung der Registrierung und/ oder die Identifizierung kann auch verzichtet werden.

Im Folgenden kann der Dienstnutzer die Durchführung der Dienststeuerfunktionen S1 oder S2 initiieren.

Die Dienststeuerfunktionen S1 ermöglicht es, daß mittels der Interaktion TS zwischen der Dienststeuerfunktion S1 und dem Endgerät des Dienstnutzers über das Kommunikationsnetz KN Daten über eine nutzerspezifische Tour des Dienstnutzers spezifiziert werden und in einem nutzerspezifischen Datensatz des Dienstnutzers abspeichert werden.

Die Dienststeuerfunktion S1 überprüft zuerst, ob eine nutzerspezifische Tour, für die bereits ein Datensatz in der Datenbank PDB abgespeichert ist, abgeändert werden soll, oder ob eine neue nutzerspezifische Tour spezifiziert werden soll. Soll eine neue Tour spezifiziert werden, so legt sie einen entsprechenden neuen nutzerspezifischen Datensatz in der Datenbank PDB an.

Zur Spezifizierung der Tour werden von der Dienststeuerfunktion S1 auf entsprechende Steuerbefehle von dem Endgerät des Dienstnutzers die oben im Rahmen der Datenbank PDB beschriebenen Daten über eine nutzerspezifische Tour festgelegt, ermittelt und in dem zugeordneten nutzerspezifischen Datensatz abgespeichert. Der Dienstnutzer kann hierbei über die Dienststeuerfunktion S1 auch auf die in der Datenbank TDB abgespeicherten Daten zugreifen, sich solche Daten über das Kommunikationsnetz KN ausgeben lassen, und solche Daten ganz, teilweise oder in modifizierter Form in den nutzerspezifischen Datensatz kopieren. Es ist hierbei natürlich auch möglich, daß nur ein Zeiger auf oder eine Verknüpfung mit den Daten der Datenbank TDB in dem nutzerspezifischen Datensatz abgespeichert wird. Auf diese Art und Weise wird von der Dienststeuerfunktion S1 der geographischen Ablauf der Tour bestimmt und in dem nutzerspezifischen Datensatz, beispielsweise als Satz von geographischen Wegepunkten, abgespeichert. Weiter kann zu Stellen im geographischen Ablauf der Tour noch jeweils ein Satz von Parametern und/oder zugeordneten Informationen durch Interaktion zwischen dem Endgerät des Dienstnutzers und der Dienststeuerfunktion S1 spezifiziert werden. Solche Informationen werden hierbei vorzugsweise der Datenbank TDB entnommen.

Weiter ist es vorteilhaft, daß die Dienststeuerfunktion S1 jeder nutzerspezifischen Tour eine spezifische Kennung oder eine spezifische Netzadresse oder Dienstkennung zuordnet und diese Kennung, Netzadresse oder Dienstkennung dem Endgerät TE1 zur späteren Identifizierung der Tour übermittelt. Diese Daten können hierbei insbesondere beim späteren Zugriff mittels eines mobilen Endgerätes zur schnellen Identifizierung der Tour dienen.

Die Dienststeuerfunktion S2 ermöglicht es, daß von dem mobilen Endgerät TE2 während einer Tour über das Kommunikationsnetz KN übermittelte und von der Dienststeuerfunktion S5 mittels einer Zuordnung entsprechend dem Korrelationsergebnis abgespeicherte Informationen auf Anforderung von dem Dienst-Server SERV an das Endgerät TE1 des Dienstnutzers gesendet werden. Die genaue Funktionsweise der Dienststeuerfunktion S2 wird bei der Funktionsweise der Dienststeuerfunktion S6 erläutert.

Die Dienststeuereinheit SP2 erbringt die Dienststeuerfunktionen S3 bis S6 und stellt eine Benutzerschnittstelle zu diesen Dienststeuerfunktionen bereit. Der Dienstnutzer kommuniziert mit der Dienststeuereinheit SP1 mittels eines mobilen Endgeräts. Grundsätzlich ist es möglich, daß das mobile Endgerät auf die Dienststeuereinheiten SP2 genauso zugreift, wie oben in Bezug auf die Dienststeuereinheit SP1 beschrieben. In diesem Fall ist es dann auch möglich, die Dienststeuerfunktionen S3 bis S6 in die Dienststeuereinheit SP1 zu integrieren.

Andererseits ist es jedoch vorteilhaft, abhängig von den jeweiligen mobilen Endgeräten ein oder mehrere der folgende Zugriffsmöglichkeiten in der Dienststeuereinheit SP2 zu implementieren:

Die Dienststeuereinheit SP2 kann eine IN Dienststeuerfunktion (IN = Intelligent Network) implementieren, die über das INAP Protokoll (INAP = Intelligent Network Applikation Part) mit Vermittlungsstellen des Kommunikationsnetzes KN kommuniziert. Die Kommunikation zwischen Dienstnutzer und Dienststeuereinheit SP2 kann beispielsweise über Sprachansagen, Audionachrichten, Spracherkennung erfolgen.

Ist die folgende Beschreibung ausreichend breit????
Die Kommunikation zwischen Dienststeuereinheit SP2 und dem mobilen Endgerät kann mittels des SMS Dienstes erfolgen (SMS= Short Message Service).

Die Kommunikation zwischen Dienststeuereinheit SP2 und dem mobilen Endgerät kann mittels WAP (= Wireless Application Protocol) oder vergleichbarer Dienste erfolgen.

Die Kommunikation zwischen Dienststeuereinheit SP2 und dem mobilen Endgerät kann mittels Datenkommunikation über GPRS (= General Packet Radio Services) oder UMTS erfolgen.

Die Dienststeuerfunktion S3 berechnet ein Korrelationsergebnis und stellt dieses Ergebnis den Dienststeuerfunktionen S4 bis S6 zur Verfügung.

Die Dienststeuerfunktion S3 empfängt hierzu Lokalisierungsdaten LI, die den Aufenthaltsort eines mobilen Endgerätes des Dienstnutzers, hier des Endgerätes TE2, beschreiben. Die Lokalisierungsdaten LI können hierbei laufend über das Kommunikationsnetz KN an die Dienststeuerfunktion S3 übermittelt werden. Es ist jedoch auch möglich, daß die Lokalisierungsdaten LI auch nur an die Dienststeuerfunktion S3 übertragen werden, wenn das mobile Endgeräte TE2 Wegeleitinformationen anfordert.

Die Lokalisierungsdaten können zum einen vom mobilen Endgerät TE2 selbst ermittelt werden, beispielsweise mittels eines integrierten GPRS Empfängers, und sodann vom mobilen Endgerät TE2 an die Dienststeuereinheit SP2 gesendet werden. Es ist jedoch auch möglich, daß die Lokalisierungsdaten LI von einem Lokalisierungsdienst des Kommunikationsnetzes KN ermittelt werden, der diese Daten dann an den Dienst-Server SERV sendet. Ein solcher Lokalisierungsdienst kann die geographische Position des mobilen Endgeräts TE2 beispielsweise mittels der Bestimmung der Funkzelle, in der sich das Endgerät TE2 gerade aufhält, und der Auswertung der Feldstärken der umliegenden Funkzellen ermitteln.

Wenn die Dienststeuerfunktion S3 Lokalisierungsdaten, die den Aufenthaltsort eines mobilen Endgerätes beschreiben, über das Kommunikationsnetz (KN) empfängt, so überprüft die Dienststeuerfunktion S3 vorteilhafterweise zuerst, ob und welcher nutzerspezifischen Tour welches Dienstnutzers diese Lokalisierungsdaten zugeordnet sind. Damit selektiert sie auch denjenigen der in der Datenbank PDB verwalteten nutzerspezifischen Datensätze PD1 bis PD3, dem die Lokalisierungsdaten zuzuordnen sind.

Es ist vorteilhaft eine derartige Funktion zentral für alle Dienststeuerfunktionen S3 bis S6 oder jeweils in den Dienststeuerfunktionen S3 bis S6 vorzusehen und diese Funktion jeweils vor Erbringen des jeweiligen von den Dienststeuerfunktionen S3 bis S6 erbrachten Diensten durchzuführen.

Die Dienssteuereinheit SP2 kann hierbei ermitteln, ob das Endgerät, mit dem sie interagiert, einem der registrierten Dienstnutzer zugeordnet ist und welchem der registrierten Dienstnutzern es zugeordnet ist. Weiter kann sie ermitteln, welchem der verschiedenen nutzerspezifische Touren diese Interaktion mit einem Endgerät des Dienstnutzers zugeordnet ist.

Dies ist beispielsweise dadurch möglich, daß die Dienststeuerfunktion S1 jeder nutzerspezifischen Tour eine spezifische Kennung oder eine spezifische Netzadresse oder Dienstkennung zuordnet und diese Kennung, Netzadresse oder Dienstkennung dem Dienstnutzer zur späteren Identifizierung der Tour übermittelt hat. Die Lokalisierungsdaten oder die Interaktion TS enthalten dann diese Kennung, werden an diese Netzadresse gesendet bzw. gerichtet, oder die Dienststeuereinheit SP2 wird mittels dieser Dienstkennung für den Empfang der Lokalisierungsdaten bzw. für die Interaktion TS getriggert. Auf diese Weise ist dann eine eindeutige Zuordnung von Lokalisierungsdaten zu einer bestimmten nutzerspezifischen Tour und damit zu einem bestimmten nutzerspezifischen Datensatz möglich.

Weiter ist es auch möglich, daß der Dienstnutzer A im Rahmen der Interaktion TS mit der Dienststeuerfunktion S1 bereits eine Zuordnung zwischen der spezifizierten nutzerspezifischen Tour und einem mobilen Endgerät festlegt und die Dienststeuereinheit S3 dieses mobile Endgerät mittels seiner Teilnehmeranschlusskennung erkennt und damit die Lokalisierungsdaten einem nutzerspezifischen Datensatz zuordnet.

Die Dienststeuerfunktion S3 korreliert mittels der empfangenen Lokalisierungsdaten LI und mittels der in dem ermittelten, zugeordneten nutzerspezifischen Datensatz, hier dem nutzerspezifischen Datensatz PD1, abgelegten Daten über eine nutzerspezifische Tour des Dienstnutzers A den Aufenthaltsort des mobilen Endgerätes TE2 mit der nutzerspezifischen Tour. Bei dieser Korrelation vergleicht die Dienststeuerfunktion S3 den in den Lokalisierungsdaten angegeben geographischen Aufenthaltsort des mobilen Endgerätes TE2 mit dem geographischen Ablauf der nutzerspezifischen Tour, der in dem Datensatz PD1 abgespeichert ist. Bei diesem Vergleich berechnet die Dienststeuerfunktion, welchem Punkt im Ablauf der nutzerspezifischen Tour der geographische Aufenthaltsort des mobilen Endgeräts am nächsten ist. Hierbei ist es vorteilhaft, die Abweichungswahrscheinlichkeit des geographischen Aufenthaltsorts einerseits (z. B. durch Meßungenauigkeit ..) und die Abweichungswahrscheinlichkeit der spezifizierten Tour (wie genau und detailliert spezifiziert) in dieser Berechnung mit zu beachten. Ist der geographische Ablauf der nutzerspezifischen Tour in dem nutzerspezifischen Datensatz mittels eines Satzes von geographischen Wegepunkten spezifiziert, so wird in dieser Berechnung der genau Ablauf der nutzerspezifischen Tour mittels Interpolation und/oder mittels Korrelation mit einer detaillierten geographischen Karte bestimmt.

Als Ergebnis der Korrelation des Aufenthaltsort des mobilen Endgerätes TE2 mit der nutzerspezifischen Tour berechnet die Dienststeuerfunktion S3 die Stelle im Ablauf der nutzerspezifischen Tour, die dem geographische Aufenthaltsort des mobilen Endgeräts am nächsten ist. Das Ergebnis kann somit in der Angabe eines der in dem Datensatz PD1 spezifizierten Wegepunktes oder eines wie oben beschriebenen ermittelten neuen Wegepunktes bestehen. Weiter ist es auch möglich, daß als Ergebnis der Korrelation Daten über ein oder mehrere Wege von dem geographischen Aufenthaltsort des mobilen Endgerätes zurück zu der spezifizierten nutzerspezifischen Tour ermittelt werden. Hierfür ist insbesondere eine weitere Korrelation mit einer detaillierten geographischen Karte vorteilhaft.

Die Korrelationsergebnisse werden von ein oder mehreren weiteren Dienststeuerfunktionen verwendet, hier beispielsweise von den Dienststeuerfunktionen S4 bis S6. Es ist natürlich auch möglich, die Korrelationsergebnisse für andere als die zu den Dienststeuerfunktionen S4 bis S6 beschriebenen Dienste zu verwenden. Weiter ist es vorteilhaft, die Korrelationsergebnisse in dem zugeordneten nutzerspezifischen Datensatz abzuspeichern. Abgespeicherte Korrelationsergebnisse können hierbei auch für die Berechnung weiterer Korrelationsergebnisse oder für die Berechnung von Wegeleitinformationen wiederverwendet werden.

Aus dem Korrelationsergebnis berechnet die Dienststeuerfunktion S4 Wegeleitinformationen. Die Berechnung der Wegeleitinformationen kann von der Dienststeuerfunktion S4 zum einen jedes mal bei dem Empfang von Lokalisierungsdaten erfolgen, nur auf eine Steuernachricht von Seiten des mobilen Endgerätes erfolgen oder abhängig von Parametern des nutzerspezifischen Datensatzes erfolgen (z.B. in gewissen Zeitabständen, an gewissen Stellen im Ablauf der nutzerspezifischen Tour).

Wegeleitinformationen sind beispielsweise Informationen, in welche Richtung der Dienstnutzer zu gehen oder zu fahren hat, um auf dem Ablauf der nutzerspezifischen Tour zu folgen oder wieder auf die nutzerspezifische Tour zu gelangen. Diese Informationen werden analog zu der oben beschriebene Art und Weise aus dem Korrelationsergebnis und den in dem Datensatz abgespeicherten Daten über die nutzerspezifische Tour berechnet.

Die berechneten Wegeleitinformationen werden sodann von der Dienststeuerfunktion S4 an das mobile Endgerät TE2 des Dienstnutzers über das Kommunikationsnetz KN übermittelt. Diese Übermittlung kann, wie bereits oben beschrieben, mittels Sprachansage, Anzeigetext, Anzeigegraphik, SMS Nachricht oder WAP Seite erfolgen. Sollte hier nicht noch ein Hinweis auf künftige Technologien stehen??

Die Dienststeuerfunktion S5 wählt mittels des Korrelationsergebnisses ortsabhängige Informationen aus und übermittelt die ausgewählten Informationen an das mobile Endgerät TE2. Diese Funktion kann die Dienststeuerfunktion S5 zum einen jedes mal bei dem Empfang von Lokalisierungsdaten erbringen, auf eine Steuernachricht von Seiten des mobilen Endgerätes erbringen oder abhängig von Parametern des nutzerspezifischen Datensatzes erbringen (z.B. in gewissen Zeitabständen, an gewissen Stellen im Ablauf der nutzerspezifischen Tour). Die Ausgabe kann hierbei wie bei der Dienststeuerfunktion S4 erfolgen.

Die Dienststeuerfunktion S5 kann mittels des Korrelationsergebnisses eine Auswahl zwischen ortsabhängige Informationen treffen, die in dem nutzerspezifische Datensatz PD1 des Dienstnutzers A, wie oben beschrieben, spezifiziert sind. Auf Anforderung von dem mobilen Endgerät TE2 werden beispielsweise die Informationen ausgewählt, die dem nach dem Korrelationsergebnis nächstgelegenen Wegepunkt zugeordnet sind. Es ist hierbei auch möglich, daß von der Dienststeuerfunktion S4 eine Nachricht an das Endgerät TE2 gesendet wird, wenn nach dem Korrelationsergebnis eine Stelle im Ablauf der in dem Datensatz PD1 abgespeicherten nutzerspezifischen Tour erreicht ist, zu der solche ortsabhängige Informationen in dem Datensatz PD1 abgespeichert sind.

Weiter ist es auch möglich, daß die Dienststeuerfunktion S5 mittels des Korrelationsergebnisses und vorteilhafterweise auch mittels eines dem Dienstnutzer zugeordneten Benutzerprofils eine Auswahl zwischen ortsabhängige Informationen trifft, die in der Datenbank TDB abgespeichert sind.

Die Dienststeuerfunktionen S6 ermöglicht es dem Dienstnutzer von dem mobilen Endgerät TE2 über das Kommunikationsnetz KN Informationen an den Dienst-Server SERV zu übermitteln. Solche Informationen können Sprachsequenzen, Audiosequenz, Videosequenzen, Bildsequenzen oder Textsequenzen sein. Die Dienststeuerfunktion S6 speichert die Informationen in dem zugeordneten nutzerspezifischen Datensatz mit einer Zuordnung entsprechend dem Korrelationsergebnis ab. Sie ordnet so beispielsweise derart empfangene Informationen mittels des Korrelationsergebnisses in einer Reihenfolge gemäß dem Ablauf der nutzerspezifischen Tour oder ordnet sie konkret einer Stelle im Ablauf der nutzerspezifischen Tour zu.

Mittels der Dienststeuerfunktion S2 ist dem Dienstnutzer A ein Zugriff auf die so in dem nutzerspezifischen Datensatz PD1 abgespeichert Informationen möglich.

## Patentansprüche

1. Verfahren zum Bereitstellen eines Dienstes über ein Kommunikationsnetz (KN), wobei bei dem Verfahren über das Kommunikationsnetz (KN) auf einen Dienst-Server (SERV) zugegriffen wird, der den Dienst für Dienst-Nutzer (A) erbringt,
**dadurch gekennzeichnet, daß** durch Interaktion (TS) zwischen einem Endgerät (TE1) des Dienstnutzers (A) und dem Dienst-Server (SERV) über das Kommunikationsnetz (KN) Daten über eine nutzerspezifische Tour des Dienstnutzers (A) spezifiziert und in einem nutzerspezifischen Datensatz (PD1) des Dienstnutzers (A) abgespeichert werden, daß Lokalisierungsdaten (LI), die den Aufenthaltsort eines mobilen Endgerätes (TE2) des Dienstnutzers beschreiben, über das Kommunikationsnetz (KN) zu dem Dienst-Server (SERV) übermittelt werden, und daß der Dienst-Server (SERV) mittels der empfangenen Lokalisierungsdaten (LI) und mittels der in dem nutzerspezifischen Datensatz (PD1) abgelegten Daten über eine nutzerspezifische Tour des Dienstnutzers (A) den Aufenthaltsort des mobilen Endgerätes (TE2) mit der nutzerspezifischen Tour korreliert und hieraus ein Korrelationsergebnis berechnet.

2. Verfahren nach Anspruch 1, **dadurch gekennzeichnet, daß** der Dienst-Server (SERV) mittels des Korrelationsergebnisses Wegeleitinformationen berechnet, und daß der Dienst-Server (SERV) die berechneten Wegeleitinformationen an das mobile Endgerät (TE) des Dienstnutzers über das Kommunikationsnetz (KN) übermittelt.

3. Verfahren nach Anspruch 1, **dadurch gekennzeichnet, daß** der Dienst-Server (SERV) mittels des Korrelationsergebnisses ortsabhängige Informationen auswählt und ausgewählte Informationen an das mobile Endgerät (TE2) übermittelt.

4. Verfahren nach Anspruch 3, **dadurch gekennzeichnet, daß** der Dienst-Server (SERV) mittels des Korrelationsergebnisses eine Auswahl zwischen ortsabhängige Informationen trifft, die in dem nutzerspezifische Datensatz (PD1) des Dienstnutzers spezifiziert sind.

5. Verfahren nach Anspruch 3, **dadurch gekennzeichnet, daß** der Dienst-Server (SERV) mittels des Korrelationsergebnisses und mittels eines Benutzerprofils eine Auswahl zwischen ortsabhängigen Informationen trifft, die in ein oder mehreren Datenbanken abgespeichert sind.

6. Verfahren nach Anspruch 1, **dadurch gekennzeichnet, daß** von dem mobilen Endgerät (TE2) über das Kommunikationsnetz (KN) Informationen an den Dienst-Server (SERV) übermittelt werden und von dem Dienst-Server (SERV) in dem zugeordneten nutzerspezifischen Datensatz (PD1) mit einer Zuordnung entsprechend dem Korrelationsergebnis abgespeichert werden.

7. Verfahren nach Anspruch 1 oder Anspruch 6, **dadurch gekennzeichnet, daß** von dem mobilen Endgerät (TE2) über das Kommunikationsnetz übermittelte und mit einer Zuordnung entsprechend dem Korrelationsergebnis abgespeicherte Informationen auf Anforderung von dem Dienst-Server (SERV) an ein Endgerät (TE1) des Dienstnutzers gesendet werden.

8. Dienst-Server (SERV) zum Bereitstellen eines Dienstes über ein Kommunikationsnetz (KN),
**dadurch gekennzeichnet, daß** der Dienst-Server (SERV) so ausgestaltet ist, daß er mittels Interaktion (TS) mit einem Endgerät (TE1) eines Dienstnutzers (A) über das Kommunikationsnetz (KN) Daten über eine nutzerspezifische Tour des Dienstnutzers (A) spezifiziert und in einem nutzerspezifischen Datensatz (PD1) des Dienstnutzers abspeichert, daß der Dienst-Server (SERV) weiter so ausgestaltet ist, daß er, wenn er Lokalisierungsdaten (LI), die den Aufenthaltsort eines mobilen Endgerätes (TE2) des Dienstnutzers beschreiben, über das Kommunikationsnetz (KN) empfängt, mittels der empfangenen Lokalisierungsdaten (LI) und mittels der in dem nutzerspezifischen Datensatz (PD1) abgelegten Daten über eine nutzerspezifische Tour des Dienstnutzers (A) den Aufenthaltsort des mobilen Endgerätes (TE2) mit der nutzerspezifischen Tour korreliert und hieraus ein Korrelationsergebnis berechnet.

9. Dienst-Server (SERV) nach Anspruch 8, **dadurch gekennzeichnet, daß** der Dienst-Server (SERV) weiter so ausgestaltet ist, daß der Dienst-Server (SERV) mittels des Korrelationsergebnisses Wegeleitinformationen berechnet und er die berechneten Wegeleitinformationen an das mobile Endgerät (TE2) des Dienstnutzers über das Kommunikationsnetz (KN) übermittelt.

10. Dienst-Server (SERV) nach Anspruch 8 oder Anspruch 9, **dadurch gekennzeichnet, daß** der Dienst-Server (SERV) weiter so ausgestaltet ist, daß er mittels des Korrelationsergebnisses ortsabhängige Informationen auswählt und ausgewählte Informationen an das mobile Endgerät (TE2) übermittelt.

11. Dienst-Server (SERV) nach einem der Ansprüche 8 bis 10, **dadurch gekennzeichnet, daß** der Dienst-Server (SERV) weiter so ausgestaltet ist, daß von dem mobilen Endgerät (TE2) über das Kommunikationsnetz übermittelte und mit einer Zuordnung entsprechend dem Korrelationsergebnis abgespeicherte Informationen auf Anforderung von dem Dienst-Server (SERV) an ein Endgerät (TE1) des Dienstnutzers gesendet werden.

12. Dienst-Server (SERV) nach Anspruch 8, **dadurch gekennzeichnet, daß** der Dienst-Server (SERV) mit einer Datenbank (PDB) versehen ist, in der nutzerspezifischen Datensätze (PD1 bis PD3) von zwei oder mehr Dienstnutzern verwaltet werden, und daß der Dienst-Server (SERV) weiter so ausgestaltet ist, daß er ermittelt, ob ein Endgerät (TE1, TE2), mit dem er interagiert, einem der zwei oder mehr Dienstnutzer zugeordnet ist und welchem der zwei oder mehr Dienstnutzern es zugeordnet ist.

13. Dienst-Server (SERV) nach Anspruch 8, **dadurch gekennzeichnet, daß** der Dienst-Server (SERV) mit einer Datenbank (PDB) versehen ist, in der zwei oder mehr nutzerspezifische Datensätze (PD1 bis PD3) eines Dienstnutzer verwaltet werden, wobei in den zwei oder mehr nutzerspezifischen Datensätzen (PD1 bis PD3) verschiedene nutzerspezifische Touren desselben Dienstnutzers (A) spezifiziert sind, und daß der Dienst-Server (SERV) weiter so ausgestaltet ist, daß er ermittelt, welcher dieser verschiedenen nutzerspezifischen Touren eine Interaktion mit einem Endgerät des Dienstnutzers zugeordnet ist.
